# EUROPEAN PATENT APPLICATION

(11) **EP 4 707 080 A1**
(43) Date of publication of application: **11.03.2026**
(21) Application number: 25805599.5
(22) Date of filing: 28.04.2025
(51) Int. Cl.: B60R 22/20, B60R 22/26

(54) **VEHICLE SEAT FOLLOW-UP SEAT BELT ASSEMBLY, FOLLOW-UP ADJUSTMENT METHOD, SEAT AND VEHICLE**

(30) Priority: 08.07.2024 CN 202410908592
(71) Applicant: Chery Automobile Co., Ltd., Wuhu, Anhui 241006 (CN)
(72) Inventor: LU, Yingxiang, Wuhu, Anhui 241006 (CN); ZHANG, Xiuqin, Wuhu, Anhui 241006 (CN); HUANG, Quanwang, Wuhu, Anhui 241006 (CN); WANG, Mufei, Wuhu, Anhui 241006 (CN); ZHOU, Chen, Wuhu, Anhui 241006 (CN)
(74) Representative: dompatent
(86) International application number: PCT/CN2025/091820
(87) International publication number: WO 2026/011901

(57) **Abstract**

Disclosed are a vehicle seat follow-up safety belt assembly, a follow-up adjustment method, a seat, and a vehicle, relating to the technical field of vehicle safety belts. The vehicle seat follow-up safety belt assembly includes a follow-up lower anchor lifting mechanism (101). The follow-up lower anchor lifting mechanism (101) includes a rivet (3), an outer rocker arm (1), and an inner rocker arm (2). A first end of the outer rocker arm (1) is fixed to a first end of the inner rocker arm (2) by the rivet (3), and the rivet (3) is configured for rotatable connection to an anchor bracket (4). A second end of the outer rocker arm (1) is configured to connect to a safety belt (7), and a second end of the inner rocker arm (2) is configured to connect to a seat body reinforcement plate (6).

## Description

The present disclosure claims priority to Chinese Patent Application No. 202410908592.0, filed on July 8, 2024 and entitled "VEHICLE SEAT FOLLOW-UP SAFETY BELT ASSEMBLY, FOLLOW-UP ADJUSTMENT METHOD, SEAT, AND VEHICLE", the content of which is incorporated herein by reference in its entirety.

### TECHNICAL FIELD

The present disclosure relates to the technical field of vehicle safety belts, and in particular, relates to a vehicle seat follow-up safety belt assembly, a follow-up adjustment method, a seat, and a vehicle.

### BACKGROUND

With the social progress and the rapid development of the automobile industry, increasing attention has been paid to traffic accidents. The use of safety belts can reduce the severity of injuries to individuals in such traffic accidents. As a primary protective configuration for the passive safety of vehicles, safety belts have been statistically shown to reduce the fatality rate of vehicle occupants by 71% and that of drivers by 77% in frontal collisions of passenger vehicles, and to reduce the fatality rate of vehicle occupants by 67% and that of the driver by 76% in side collisions of passenger vehicles. In the event of a frontal collision, the vehicle comes to an abrupt stop. The safety belt can ensure that the human body is secured to the seat and prevent forward movement due to inertia, and meanwhile, the airbag deploys to absorb the remaining impact energy. The deployment of the airbag occurs instantaneously, leaving occupants with no time to react. Studies have shown that the deployment generates an impact force of approximately 180 kg. In the case that the safety belt is not fastened prior to the collision, the enormous impact force from the rapidly inflating airbag will directly hit the head and chest of the front-row occupants from the front side, causing severe injuries. The role of the safety belt is to secure the occupants to the seat during the airbag deployment, absorb part of the impact force, and apply it to the hard positions of the human body, i.e., chest and pelvis, thereby avoiding premature contact with the airbag.

The safety belt also serves to restrain the occupant's movement. In the case that the collided vehicle rotates, the occupant's position can be effectively secured, thus reducing the injury due to displacement and avoiding ejection from the vehicle. In the case that the collided vehicle rolls over, the occupants inside the vehicle lose their center of gravity. The safety belt can not only alleviate the collision impact between the occupant and the roof, but also restrain the occupants to avoid ejection.

Nowadays, multiple automotive companies have launched integrated seats; that is, components such as the retractor and lower anchor of the safety belt have changed from being mounted on the vehicle body in a traditional mounting manner to being mounted on the seat. This allows the seat to move forward and rotate without affecting the occupant's proper use of the safety belt. In the prior art, in the case that the lower anchor structure of the safety belt is fixed to the seat slide rail, only forward and backward adjustment along with the slide rail is allowed, and the height is not adjustable.

Currently, for the safety belt with the lower anchor structure fixed to the seat slide rail, a seat shield is equipped, and the safety belt needs to extend through a notch of the seat shield. As the seat height is adjusted, the seat shield moves toward the rear upper direction of the seat along with the seat framework, while the seat lower anchor is fixed to the seat slide rail and does not move with the rise and fall of the seat. As the seat is lowered, the front end of the notch in the seat shield becomes closer to the safety belt. In the case that a frontal collision occurs in the vehicle, the safety belt strapped to the waist and abdomen of the dummy tightens and stretches forward along with the forward inertial movement of the dummy, making the front end of the safety belt prone to interference and friction with the seat shield during the collision. This results in a risk of breakage and failure of the safety belt, which could cause severe injury to the occupant.

### SUMMARY

To overcome the shortcomings of the above prior art, the present disclosure provides a vehicle seat follow-up safety belt assembly, a follow-up adjustment method, a seat, and a vehicle, and designs a safety belt assembly capable of moving vertically along with the rise and fall of the vehicle seat, so as to solve the problems of excessive proximity of the safety belt to the notch of the seat shield during downward movement of the seat with an integrated lower anchor and potential breakage of the safety belt due to the friction with the front end of the notch during a collision, thereby reducing the possibility of injury to the occupants caused by the failure of the safety belt during a vehicle collision.

To achieve the above objectives, one or more embodiments of the present disclosure provide the following technical solutions.

A first aspect of the present disclosure provides a vehicle seat follow-up safety belt assembly.

The vehicle seat follow-up safety belt assembly includes a follow-up lower anchor lifting mechanism, wherein the follow-up lower anchor lifting mechanism includes a rivet, an outer rocker arm, and an inner rocker arm, wherein a first end of the outer rocker arm is fixed to a first end of the inner rocker arm via the rivet, and the rivet is configured for rotatable connection to an anchor bracket; and a second end of the outer rocker arm is configured to connect to a safety belt, and a second end of the inner rocker arm is configured to connect to a seat body reinforcement plate.

In some embodiments, the vehicle seat follow-up safety belt assembly further includes an anchor end piece, wherein the anchor end piece is connected to the second end of the outer rocker arm, the safety belt passes through the anchor end piece, and the safety belt extends out of a notch of a seat shield.

In some embodiments, the outer rocker arm and the inner rocker arm are disposed on two sides of the anchor bracket, respectively, and an angle between the second end of the outer rocker arm and the second end of the inner rocker arm is within a range of 20° to 120°.

In some embodiments, the anchor bracket is fixedly connected to a seat slide rail.

In some embodiments, an anchor mounting hole is reserved on the anchor bracket, and the rivet is inserted into the anchor mounting hole.

In some embodiments, the second end of the inner rocker arm is provided with an opening, and the opening at the second end of the inner rocker arm is fixedly connected to an opening in the seat body reinforcement plate via a rotary shaft; the second end of the outer rocker arm is provided with a limiting hole, the anchor end piece is provided with a limiting block, and the limiting hole is adapted to the limiting block.

In some embodiments, a maximum backward displacement, corresponding to a maximum rotation angle of the anchor end piece driven by the follow-up lower anchor lifting mechanism, is greater than a maximum backward displacement of the seat shield.

A second aspect of the present disclosure provides a seat.

The seat includes a seat body, a seat height adjustment mechanism, and the vehicle seat follow-up safety belt assembly as defined in the first aspect. The seat body is provided with a seat shield, the seat shield is provided with a notch, and a safety belt of the vehicle seat follow-up safety belt assembly extends out of the notch; the seat height adjustment mechanism includes a seat slide rail, the seat slide rail is disposed below the seat body, and the seat slide rail is connected to an anchor bracket of the vehicle seat follow-up safety belt assembly; and the seat body includes a seat body reinforcement plate, the seat body reinforcement plate is connected to an inner rocker arm of the vehicle seat follow-up safety belt assembly.

A third aspect of the present disclosure provides a vehicle.

The vehicle includes the vehicle seat follow-up safety belt assembly as defined in the first aspect or the seat as defined in the second aspect.

A fourth aspect of the present disclosure provides a follow-up adjustment method for a vehicle seat follow-up safety belt assembly.

The follow-up adjustment method for a vehicle seat follow-up safety belt assembly includes the following steps:
the seat body reinforcement plate moving toward a rear lower direction in the case that a vehicle seat is adjusted downward from a highest position;
the seat body reinforcement plate driving an inner rocker arm to move toward the rear lower direction, with positions of the inner rocker arm and an outer rocker arm being relatively fixed, such that the inner rocker arm drives the outer rocker arm, and the outer rocker arm drives an anchor end piece and a safety belt on the anchor end piece to move toward a rear upper direction; and
a tail end of the safety belt moving backward along a notch of a seat shield, such that the tail end of the safety belt moves away from a front end of the notch of the seat shield that is moving toward the rear lower direction.

The technical solutions according to the present disclosure at least achieve the following beneficial effects:
The present disclosure provides a vehicle seat follow-up safety belt assembly, a follow-up adjustment method, a seat, and a vehicle. The vehicle seat follow-up safety belt assembly provides a follow-up lower anchor lifting mechanism, which includes a rivet, an outer rocker arm, and an inner rocker arm. A first end of the outer rocker arm is fixed to a first end of the inner rocker arm via the rivet, and the rivet is configured for rotatable connection to an anchor bracket; and a second end of the outer rocker arm is configured to connect to a safety belt, and a second end of the inner rocker arm is configured to connect to a seat body reinforcement plate. Based on this principle, by means of the follow-up lower anchor lifting mechanism, the safety belt lower anchor structure (the anchor end piece) originally fixed to the seat slide rail can move vertically along with the rise and fall of the seat body. In addition, in the case that the seat body is lowered, the safety belt lower anchor structure (the anchor end piece) can rotate backward, thereby increasing the distance between the safety belt and the foremost end of the notch of the seat shield. This design solves the problems of excessive proximity of the safety belt to the notch of the seat shield during downward movement of the seat with an integrated lower anchor and potential breakage of the safety belt due to the friction with the front end of the notch during a collision, thereby reducing the possibility of injury to the occupants caused by the failure of the safety belt during a vehicle collision.

The present disclosure can effectively improve the safety of the seat-type lower anchor safety belt, avoid the breakage of the safety belt due to interference with the notch of the seat shield during a collision, reduce the injury suffered by the occupants during a collision or runaway rollover accident, and enhance the user satisfaction and the product market competitiveness.

In the present disclosure, with the rise and fall of the seat, the anchor end piece can be rotated by a maximum of 80° and moved backward by 63 mm, which is farther than the backward displacement of the seat shield. This effectively avoids the interference between the notch at the front end of the seat shield and the safety belt during the movement of the seat, and enables the safety belt to better fit the waist of the occupants in the case that the seat is lowered, thereby bringing a more comfortable experience.

The present disclosure features a simple structure, easy operation, and low cost. It supports mounting and retrofitting on the original seat bracket, thereby offering convenient mounting and high reliability.

Additional aspects and advantages of the present disclosure will be partially presented in the following description, and in part will become apparent from the following description, or will be learned through the practice of the present disclosure.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic view of a vehicle seat follow-up safety belt assembly in the highest seat state according to some embodiments of the present disclosure;
FIG. 2 is a schematic view of a vehicle seat follow-up safety belt assembly in the lowest seat state according to some embodiments of the present disclosure;
FIG. 3 is an axonometric schematic view illustrating mounting of a vehicle seat follow-up safety belt assembly according to some embodiments of the present disclosure;
FIG. 4 is a schematic front view illustrating mounting of a vehicle seat follow-up safety belt assembly according to some embodiments of the present disclosure;
FIG. 5 is an axonometric schematic view illustrating a follow-up lower anchor lifting mechanism according to some embodiments of the present disclosure;
FIG. 6 is a schematic front view of a follow-up lower anchor lifting mechanism according to some embodiments of the present disclosure; and
FIG. 7 is a schematic left view of a follow-up lower anchor lifting mechanism according to some embodiments of the present disclosure.

### Reference numerals

1, outer rocker arm, 2, inner rocker arm, 3, rivet, 101, follow-up lower anchor lifting mechanism, 4, anchor bracket, 5, anchor end piece, 6, seat body reinforcement plate, 7, safety belt, 8, seat shield, 9, seat slide rail, 10, opening, 11, rotary shaft, 12, limiting hole, 13, limiting block, 14, seat body.

### DETAILED DESCRIPTION

Unless otherwise defined, technical or scientific terms used herein shall have the ordinary meaning as understood by those of ordinary skill in the art to which the present disclosure belongs. The terms "first", "second", "third", and other similar words, as used in the specification and in the claims of the patent specification of the present disclosure, do not indicate any order, quantity, or importance, but are merely defined to distinguish different components. Likewise, the terms "a", "an", or other similar words do not indicate a limitation of quantity, but rather the presence of at least one. The terms "include", "comprise", or other similar words indicate that the elements or objects stated before "include" or "comprise" encompass the elements or objects and equivalents thereof listed after "include" or "comprise", but do not exclude other elements or objects. The terms "connecting", "connected", or other similar words are not limited to physical or mechanical connections, but may include electrical connections, whether direct or indirect. "Up", "down", "left", "right", and the like are merely defined to indicate relative positional relationships. In the case that the absolute position of a described object changes, the relative position relationship may also change accordingly.

For clearer descriptions of the objectives, technical solutions, and advantages of the present disclosure, embodiments of the present disclosure are further described in detail hereinafter with reference to the accompanying drawings.

The embodiments of the present disclosure are described in detail below. Examples of the embodiments are illustrated in the accompanying drawings, in which identical or similar reference numerals throughout represent identical or similar elements, or elements having identical or similar functions. The embodiments described below with reference to the accompanying drawings are exemplary and intended to explain the present disclosure, and should not be construed as limiting the present disclosure.

In the related art, the lower anchor structure of a safety belt 7 is fixed to a seat slide rail 9, such that only forward and backward adjustment along with the slide rail is allowed, and the height is not adjustable. In the case that the driver or passenger adjusts the seat height, as the seat height increases, a seat shield 8 rises along with the seat framework toward the rear upper direction, while the safety belt 7 remains fixed to the seat slide rail 9 and does not move with the rise and fall of the seat. As the seat height decreases, the front end of the notch in the seat shield 8 becomes closer to the safety belt 7. In the case that a front collision occurs in the vehicle, the safety belt 7 tightens and stretches forward due to the forward inertial motion, making the front end of the safety belt 7 prone to interference and friction with the seat shield 8 during the collision. This results in a risk of breakage and failure of the safety belt 7, which could cause severe injury to the driver or passenger.

Therefore, the non-adjustable-height design of the lower anchor of the safety belt 7 in the related art still faces certain potential safety hazards and risks. Based on this, some specific embodiments of the present disclosure disclose a vehicle seat follow-up safety belt assembly, in which the lower anchor of the safety belt 7 is designed as a follow-up structure that moves vertically along with the rise and fall of the seat. By means of an ingenious and simple specific structural design, the lower anchor of the safety belt 7 rotates backward in the case that the seat is adjusted downward from a high position, thereby increasing the distance between the safety belt 7 and the foremost end of the notch of the seat shield 8. This design can solve the problems, in the prior art, of excessive proximity of the safety belt 7 to the notch of the seat shield 8 during downward movement of the seat with an integrated lower anchor and potential breakage of the safety belt 7 due to the friction with the front end of the notch during a collision, thereby reducing the possibility of injury to the occupants caused by the failure of the safety belt 7 during a vehicle collision.

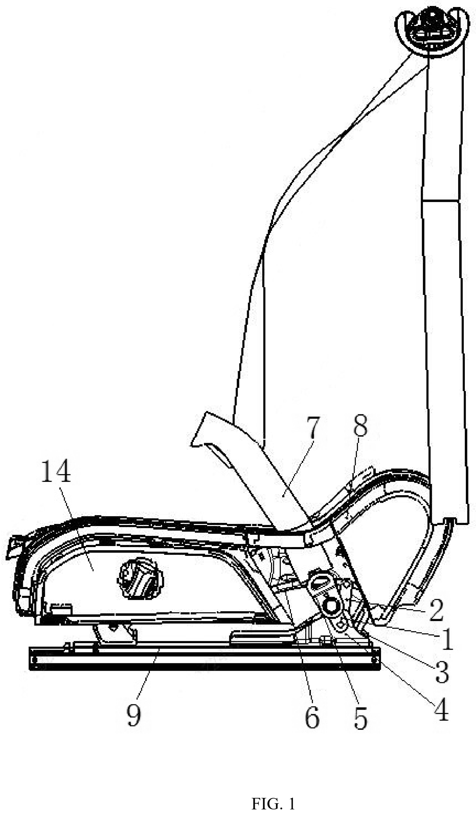

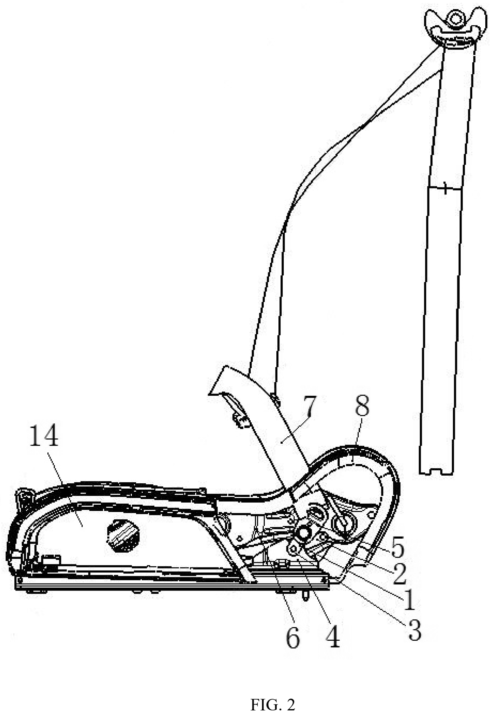

In the embodiments, the vehicle seat follow-up safety belt assembly is applied to the seat of the vehicle. As shown in FIGS. 1 and 2, the seat includes a seat body 14 and a seat slide rail 9. The seat slide rail 9 is disposed below the seat body 14, and the height adjustment of the seat body 14 can be performed on the seat slide rail 9. In addition, in the case that the seat body 14 is lowered, the seat body 14 also moves backward. The seat follow-up safety belt assembly includes an anchor bracket 4 and a safety belt 7, and the anchor bracket 4 is fixed to the seat slide rail 9. The seat body 14 is provided with a seat shield 8, and the seat shield 8 is movable with the movement of the seat body 14. The safety belt 7 is rotatably connected to the anchor bracket 4 and extends out of the seat shield 8.

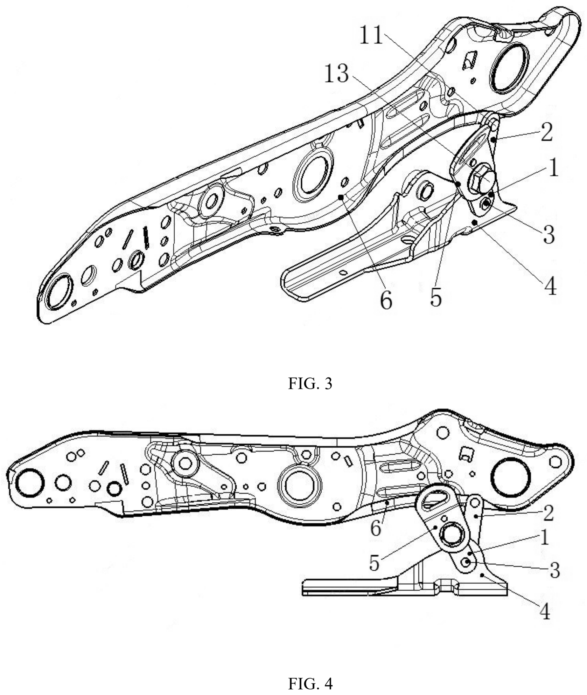

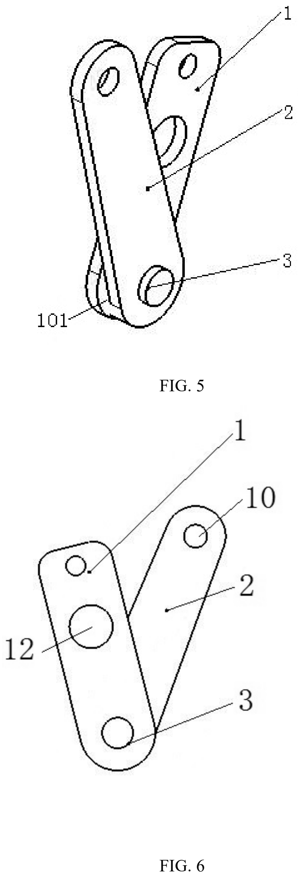

Referring to FIGS. 3 to 7, the vehicle seat follow-up safety belt assembly further includes a follow-up lower anchor lifting mechanism 101, and FIGS. 5 to 7 are an axonometric schematic view, a schematic front view, and a schematic left view of the follow-up lower anchor lifting mechanism 101 of the vehicle seat follow-up safety belt assembly according to the embodiments, respectively. The follow-up lower anchor lifting mechanism 101 includes a rivet 3, an outer rocker arm 1, and an inner rocker arm 2. A first end of the outer rocker arm 1 is fixed to a first end of the inner rocker arm 2 via the rivet 3, and the rivet 3 is configured to be rotatably connected to the anchor bracket 4. A second end of the outer rocker arm 1 is configured to connect to the safety belt 7, and a second end of the inner rocker arm 2 is configured to connect to a seat body reinforcement plate 6. The outer rocker arm 1 and the inner rocker arm 2 are fixed via the rivet 3, and the relative position of the outer rocker arm and the inner rocker arm remains unchanged during rotation. Therefore, in the follow-up process, the movement of the inner rocker arm 2 drives the outer rocker arm 1 to move, thereby moving the position of the safety belt 7 connected to the outer rocker arm 1.

In the embodiments, the second end of the inner rocker arm 2 is an end distal to the first end of the inner rocker arm 2, and the second end of the outer rocker arm 1 is an end distal to the first end of the outer rocker arm 1. The second end of the outer rocker arm 1 is square, while the second end of the inner rocker arm 2 is arc-shaped. The second end of the square outer rocker arm 1 is provided with a rounded corner, and openings are provided at positions of both the inner rocker arm 2 and the outer rocker arm 1 proximal to the second end, which facilitates convenient connection with other components.

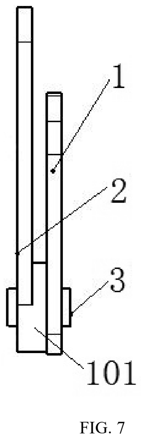

As shown in FIGS. 5 and 6, the angle between the second end of the outer rocker arm 1 and the second end of the inner rocker arm 2 is set within a range of 20° to 120°. In the embodiments, the angle is set to 30°. It should be understood that the first end of the outer rocker arm 1 and the first end of the inner rocker arm 2 are disposed in an overlapping manner, as shown in FIG. 7, to facilitate the fixation via the rivet 3.

The second end of the outer rocker arm 1 and the second end of the inner rocker arm 2 are set at a certain angle, as shown in FIGS. 1 to 4, in order that, in the case that the vehicle seat follow-up safety belt assembly according to the embodiments is mounted on the seat, the driver or passenger can adjust the height of the seat, such that the seat body reinforcement plate 6 is displaced, and then the seat body reinforcement plate 6 drives the inner rocker arm 2 to be displaced, resulting in the rotation of the inner rocker arm 2. Since the first end of the inner rocker arm 2 is fixed by the rivet 3 to the first end of the outer rocker arm 1, and the rivet 3 is rotatably connected to the anchor bracket 4, the movement of the inner rocker arm 2 drives the rivet 3 to rotate along the anchor bracket 4. This causes the outer rocker arm 1 to also rotate along the anchor bracket 4, thereby driving the lower anchor of the safety belt 7 to move. There is a certain angle between the outer rocker arm 1 and the inner rocker arm 2, which can effectively change the moving direction of the safety belt 7 and the moving direction of the notch in the seat shield 8 of the seat body 14, thereby ensuring that the moving direction of the safety belt 7 is different from the moving direction of the notch in the seat shield 8 of the seat body 14. This increases the distance between the safety belt 7 and the foremost end of the notch of the seat shield 8, and solves the problems of excessive proximity of the safety belt 7 to the notch of the seat shield 8 during downward seat movement and potential breakage of the safety belt 7 due to the friction with the front end of the notch during a collision.

For example, in some embodiments, due to an angle of 30° between the second end of the outer rocker arm 1 and the second end of the inner rocker arm 2, in the case that the driver or passenger adjusts the seat to the highest position (or a high position) and then lowers the seat, the existence of this angle causes the moving direction of the seat body 14 connected to the inner rocker arm 2 to differ from the moving direction of the safety belt 7 connected to the outer rocker arm 1. That is, the movement position of the notch (the notch of the seat shield 8) in the seat body 14, through which the safety belt 7 passes, is different from the moving direction of the safety belt 7. Therefore, this prevents the safety belt 7 from fitting or interfering with the front end of the notch, thereby avoiding serious consequences in the event of a collision or accident.

The outer rocker arm 1 is connected to the safety belt 7 via an anchor end piece 5. The anchor end piece 5 is connected to the second end of the outer rocker arm 1, the safety belt 7 passes through the anchor end piece 5, and the safety belt 7 extends out of the notch of the seat shield 8. Furthermore, to better prevent the safety belt 7 from fitting or interfering with the front end of the notch, the maximum backward displacement, corresponding to the maximum rotation angle of the anchor end piece 5 driven by the follow-up lower anchor lifting mechanism 101, is greater than the maximum backward displacement of the seat shield 8, which facilitates a certain gap between the safety belt 7 and the front end of the notch, thereby better ensuring the safety of the driver and passenger.

In some embodiments, to better ensure that the movement position of the notch in the seat body 14, through which the safety belt 7 passes, is different from the moving direction of the safety belt 7 passing therethrough, the specific positions of the outer rocker arm 1 and the inner rocker arm 2 in the highest position state of the seat body 14 can be further defined.

Specifically, referring to FIGS. 1 and 2, FIG. 1 is a schematic view of a vehicle seat follow-up safety belt assembly in the highest seat state; and FIG. 2 is a schematic view of a vehicle seat follow-up safety belt assembly in the lowest state. As can be seen from FIG. 1, in the case that the seat is in the highest state, the upward movement of the seat body 14 has caused the inner rocker arm 2 to rotate, along the anchor bracket 4, past the vertical 12 o'clock direction. In this case, the anchor end piece 5 driven by the outer rocker arm 1 has not yet reached the vertical 12 o'clock direction between the anchors.

During the transition from the state in FIG. 1 to the state in FIG. 2, that is, in the case that the driver or passenger adjusts the seat downward from the highest state to the lowest state, as the seat body 14 moves toward the bottom right, the seat body reinforcement plate 6 and the seat shield 8 also move toward the bottom right. Since the inner rocker arm 2 in FIG. 6 has already passed the vertical 12 o'clock direction, the inner rocker arm 2 also moves toward the bottom right under the driving of the seat body reinforcement plate 6.

In this case, since the outer rocker arm 1 has not yet reached the vertical 12 o'clock direction, in the process in which the inner rocker arm 2 drives the outer rocker arm 1 to rotate toward the bottom right, the actual moving direction of the outer rocker arm 1 is the top right. Therefore, the anchor end piece 5 connected to the outer rocker arm 1 and the safety belt 7 passing through the anchor end piece 5 also move toward the top right, thereby ensuring the difference in the moving direction between the safety belt 7 and the notch of the seat shield 8, and better ensuring the distance of the gap between the safety belt 7 and the front end of the notch.

In some embodiments, the above limitations may be omitted, as long as the angle difference between the inner rocker arm 2 and the outer rocker arm 1 is appropriate, or a certain difference may be ensured between the moving direction of the safety belt 7 and the moving direction of the notch. This is not limited in the embodiments.

In the embodiments, with the rise and fall of the seat, the anchor end piece 5 is rotated by a maximum of 80° and moved backward by 63 mm, which is farther than the backward displacement of the seat shield 8. This effectively avoids the interference between the notch at the front end of the seat shield 8 and the safety belt 7 during the seat movement, and enables the safety belt 7 to better fit the waist of the occupants in the case that the seat is adjusted downward, thereby effectively improving the safety of the seat-type lower anchor safety belt 7, avoiding the breakage of the safety belt 7 due to the interference with the notch of the seat shield 8 during a collision, and reducing the injury to the occupants during a crash or runaway rollover accident.

Referring to FIGS. 3 and 4, in some embodiments, the outer rocker arm 1 and the inner rocker arm 2 are disposed on two sides of the anchor bracket 4, respectively, an anchor mounting hole is reserved on the anchor bracket 4, and the rivet 3 is inserted into the anchor mounting hole. In the embodiments, the anchor end piece 5 is connected to the second end of the outer rocker arm 1, the safety belt 7 passes through the anchor end piece 5, and the safety belt 7 extends out of the notch of the seat shield 8; the anchor bracket 4 is fixedly connected to the seat slide rail 9.

The second end of the inner rocker arm 2 is provided with an opening 10, and the opening 10 at the second end of the inner rocker arm 2 is fixedly connected to an opening in the seat body reinforcement plate 6 via a rotary shaft 11. The second end of the outer rocker arm 1 is provided with a limiting hole 12, the anchor end piece 5 is provided with a limiting block 13, and the limiting hole 12 is adapted to the limiting block 13, such that the anchor end piece 5 is fixedly connected to the second end of the outer rocker arm 1.

In addition, in the embodiments, the seat body reinforcement plate 6 is a left-side reinforcement plate of the seat body.

The specific mounting method is as follows.

During the mounting process, the outer rocker arm 1 and the inner rocker arm 2 are riveted to the original seat anchor fixing bracket (the anchor bracket 4) by the rivet 3, and the outer rocker arm 1 and the inner rocker arm 2 may rotate around the hole of the seat fixing bracket; the outer rocker arm 1 is configured for mounting the anchor end piece 5, and the inner rocker arm 2 is riveted to the left reinforcement plate of the seat body (the seat body reinforcement plate 6). The seat can be adjusted up and down under the action of the four-bar linkage mechanism and the motor. In the case that the seat is adjusted up and down, the inner rocker arm 2 is riveted to the left reinforcement plate of the seat body, and drives the outer rocker arm 1 and the anchor end piece 5 fixed to the outer rocker arm 1 to move along with the reinforcement plate. In the case that the seat is adjusted downward, the anchor end piece 5 can pull the tail end of the safety belt 7 to move backward along the notch of the seat shield 8, such that the tail end of the safety belt 7 moves away from the notch at the front end of the seat shield 8 that is moving toward the rear lower direction.

More specifically, the specific mounting method according to the embodiments refers to FIG. 3. The outer rocker arm 1 and the inner rocker arm 2 are mounted on the seat anchor bracket 4. The square block on the outer rocker arm 1 and the square groove of the circular boss on the inner rocker arm 2 are spliced at an included angle of 30° formed between the outer rocker arm 1 and the inner rocker arm 2, and mounted into the original anchor mounting hole of the seat anchor bracket 4; then the rivet 3 is used for fixation, such that the outer rocker arm 1 and the inner rocker arm 2 can rotate around the seat anchor bracket 4.

The opening 10 in the inner rocker arm 2 is fixedly connected to the opening 10 in the seat body reinforcement plate 6 via the rotary shaft 11.

Then, the limiting block 13 of the anchor end piece 5 is aligned with the limiting hole 12 of the outer rocker arm 1, and the limiting block and the limiting hole are fixed with a bolt.

Finally, the safety belt 7 is mounted on the anchor bracket 4, such that the safety belt 7 passes through the anchor end piece 5. In addition, the seat shield 8 is mounted, and the safety belt 7 extends out of the notch of the seat shield 8, as shown in FIGS. 1 and 2, to complete the mounting of the entire vehicle seat follow-up safety belt assembly.

The working principle is as follows.

The functional effects after mounting in the embodiments are shown in FIGS. 1 and 2, and the highest seat state is shown in FIG. 1. During downward adjustment of the seat mechanism, the seat shield 8 fixed to the seat body 14 also moves toward the rear lower direction accordingly, and the seat anchor bracket 4 is fixed to the seat slide rail 9. The vertical movement of the seat does not change the state of the anchor bracket 4. In this case, the seat body reinforcement plate 6 moves toward the rear lower direction, and drives the inner rocker arm 2 to move toward the rear lower direction. The inner rocker arm 2 is connected to the outer rocker arm 1 by the rivet 3, such that the positions of the inner rocker arm 2 and the outer rocker arm 1 are relatively fixed. The movement of the outer rocker arm 1 and the anchor end piece 5 fixed thereon toward the rear upper direction drives the tail end of the safety belt 7 to move backward along the notch of the seat shield 8, such that the tail end of the safety belt 7 moves away from the notch at the front end of the seat shield 8 that is moving toward the rear lower direction, thereby achieving the vertical adjustment of the lower anchor of the safety belt 7.

The mechanism moves with the rise and fall of the seat. In the process in which the seat is adjusted from the highest position to the lowest position, the anchor end piece 55 can be rotated by a maximum of 80° and moved backward by 63 mm, which is farther than the backward displacement of the seat shield 8. This effectively avoids the interference between the notch at the front end of the seat shield 8 and the safety belt 7 during the movement of the seat, and enables the safety belt 7 to better fit the waist of the occupants in the case that the seat is lowered, thereby preventing excessive slack of the safety belt 7. In the event of a collision, insufficient restraint of the waist of the occupants may cause them to slide down, thereby causing additional injury to the occupants.

The embodiments disclose a seat.

The seat, as shown in FIGS. 1 and 2, includes a seat body 14, a seat height adjustment mechanism, and the vehicle seat follow-up safety belt assembly as described above. The seat body 14 is provided with a seat shield 8. The seat shield 8 is provided with a notch, and a safety belt 7 of the vehicle seat follow-up safety belt assembly extends out of the notch. The seat height adjustment mechanism includes a seat slide rail 9. The seat slide rail 9 is disposed below the seat body 14, and the seat slide rail 9 is connected to an anchor bracket 4 of the vehicle seat follow-up safety belt assembly. The seat body 14 includes a seat body reinforcement plate 6, and the seat body reinforcement plate 6 is connected to an inner rocker arm 2 of the vehicle seat follow-up safety belt assembly.

In the embodiments, the seat height adjustment mechanism further includes a motor and a four-bar linkage mechanism. The motor drives the four-bar linkage mechanism to move, thereby driving the seat body 14 to move along the seat slide rail 9, achieving the purpose of raising or lowering the seat.

The embodiments provide a vehicle.

The vehicle includes the vehicle seat follow-up safety belt assembly described above or the seat described above.

The embodiments provide a follow-up adjustment method for a vehicle seat follow-up safety belt assembly.

The follow-up adjustment method for a vehicle seat follow-up safety belt assembly includes the following steps.

In the case that the vehicle seat is adjusted downward from the highest position, the seat body reinforcement plate 6 moves toward the rear lower direction.

The seat body reinforcement plate 6 drives the inner rocker arm 2 to move toward the rear lower direction, with the positions of the inner rocker arm 2 and the outer rocker arm 1 being relatively fixed, such that the inner rocker arm 2 drives the outer rocker arm 1, and the outer rocker arm 1 drives the anchor end piece 5 and the safety belt 7 on the anchor end piece 5 to move toward the rear upper direction.

The tail end of the safety belt 7 moves backward along the notch of the seat shield 8, such that the tail end of the safety belt 7 moves away from the front end of the notch of the seat shield 8 that is moving toward the rear lower direction.

In fact, the follow-up adjustment method for a vehicle seat follow-up safety belt assembly according to the embodiments is designed to ensure that, in the case that the seat is lowered, the moving direction of the safety belt 7 is different from the moving direction of the notch of the safety belt 7 in the seat shield 8, so as to achieve the purpose that the safety belt 7 is away from the front end of the notch.

Described above are merely optional embodiments of the present disclosure and are not intended to limit the present disclosure. Any modifications, equivalent substitutions, improvements, or the like, made within the principle of the present disclosure, shall fall within the protection scope of the present disclosure.

## Claims

1. A vehicle seat follow-up safety belt assembly, applicable to a seat, comprising a follow-up lower anchor lifting mechanism (101) and an anchor bracket (4), wherein
the follow-up lower anchor lifting mechanism (101) comprises a rivet (3), an outer rocker arm (1), and an inner rocker arm (2), wherein a first end of the outer rocker arm (1) is fixed to a first end of the inner rocker arm (2) via the rivet (3), and the rivet (3) is configured for rotatable connection to the anchor bracket (4); and
a second end of the outer rocker arm (1) is configured to connect to a safety belt (7), and a second end of the inner rocker arm (2) is configured to connect to a seat body reinforcement plate (6) of the seat.

2. The vehicle seat follow-up safety belt assembly according to claim 1, further comprising an anchor end piece (5), wherein the anchor end piece (5) is connected to the second end of the outer rocker arm (1), and the safety belt (7) passes through the anchor end piece (5) and extends out of a notch of a seat shield (8) of the seat.

3. The vehicle seat follow-up safety belt assembly according to claim 2, wherein a maximum backward displacement, corresponding to a maximum rotation angle of the anchor end piece (5) driven by the follow-up lower anchor lifting mechanism (101), is greater than a maximum backward displacement of the seat shield (8).

4. The vehicle seat follow-up safety belt assembly according to claim 2, wherein the second end of the inner rocker arm (2) is provided with an opening, and the opening at the second end of the inner rocker arm (2) is fixedly connected to an opening in the seat body reinforcement plate (6) via a rotary shaft; and the second end of the outer rocker arm (1) is provided with a limiting hole (12), the anchor end piece (5) is provided with a limiting block (13), and the limiting hole (12) is adapted to the limiting block (13).

5. The vehicle seat follow-up safety belt assembly according to claim 1, wherein the outer rocker arm (1) and the inner rocker arm (2) are respectively disposed on two sides of the anchor bracket (4), and an angle between the second end of the outer rocker arm (1) and the second end of the inner rocker arm (2) is within a range of 20° to 120°.

6. The vehicle seat follow-up safety belt assembly according to claim 1, wherein the anchor bracket (4) is fixedly connected to a seat slide rail (9) of the seat.

7. The vehicle seat follow-up safety belt assembly according to claim 6, wherein an anchor mounting hole is reserved on the anchor bracket (4), and the rivet (3) is inserted into the anchor mounting hole.

8. A seat, comprising a seat body (14), a seat height adjustment mechanism, and the vehicle seat follow-up safety belt assembly as defined in any one of claims 1 to 7, wherein the seat body (14) is provided with a seat shield (8), the seat shield (8) is provided with a notch, and the safety belt (7) of the vehicle seat follow-up safety belt assembly extends out of the notch;
the seat height adjustment mechanism comprises a seat slide rail (9), the seat slide rail (9) is disposed below the seat body (14), and the seat slide rail (9) is connected to the anchor bracket (4) of the vehicle seat follow-up safety belt assembly; and
the seat body (14) comprises a seat body reinforcement plate (6), and the seat body reinforcement plate (6) is connected to the inner rocker arm (2) of the vehicle seat follow-up safety belt assembly.

9. A vehicle, comprising the vehicle seat follow-up safety belt assembly as defined in any one of claims 1 to 7 or the seat as defined in claim 8.

10. A follow-up adjustment method for a vehicle seat follow-up safety belt assembly, applicable to the seat as defined in claim 8, the follow-up adjustment method comprising:
the seat body reinforcement plate (6) moving toward a rear lower direction in a case that the seat is adjusted downward from a highest position;
the seat body reinforcement plate (6) driving the inner rocker arm (2) to move toward the rear lower direction, with positions of the inner rocker arm (1) and the outer rocker arm (2) being relatively fixed, such that the inner rocker arm (1) drives the outer rocker arm, and the outer rocker arm drives an anchor end piece and the safety belt on the anchor end piece to move toward a rear upper direction; and
a tail end of the safety belt (7) moving backward along the notch of the seat shield (8), such that the tail end of the safety belt (7) moves away from a front end of the notch of the seat shield (8) that is moving toward the rear lower direction.
